# EUROPEAN PATENT SPECIFICATION

(11) **EP 4 268 590 B1**
(45) Date of publication and mention of the grant of the patent: **22.01.2025**
(21) Application number: 23169637.8
(22) Date of filing: 24.04.2023
(51) Int. Cl.: A01K 5/02

(54) **METHOD OF FEEDING PIGS**
VERFAHREN ZUR FÜTTERUNG VON SCHWEINEN
PROCÉDÉ D'ALIMENTATION DE PORCS

(30) Priority: 25.04.2022 NL 2031690
(43) Date of publication of application: 01.11.2023
(73) Proprietor: Hetman, Volodymyr, 52200 Zhovti Vody town (UA)
(72) Inventor: Hetman, Volodymyr, 52200 Zhovti Vody town (UA)
(74) Representative: Verhees, Godefridus Josephus Maria

(56) References cited:
- CN-A- 110 692 531
- CN-A- 114 128 638
- KR-B1- 101 794 688

## Description

### Technical field of the invention

The invention relates to a method of feeding pigs comprising:
- providing a feeding device comprising:
   - a container for feed, as well as
   - a feeding trough from which pigs can eat,
   - measuring means for measuring the amount of feed in the feeding trough, and
   - adjustable feed means for supplying feed from the container to the feeding trough,
- supplying feed from the container to the feeding trough until a first amount of feed is present in the feeding trough, and
- measuring the amount of food in the feeding trough during feeding and as soon as the amount of feed in the feeding trough falls below a limit value, because pigs eat the feed, feed is supplied from the container to the feeding trough at a first feed rate and at the same time the amount of feed in the feeding trough is measured, until the first amount of feed is re-entered the feeding trough is present.

### Background of the invention

A method of feeding pigs according to the preamble of claim 1 is known from CN 110 692 531 A. In this known method the feed supply is periodically during a period of time stopped so that the pigs eat all the food in the trough so that no old feed residues are left behind. By periodically ensuring that the pigs eat the feeding trough empty and thereby cleaning the feeding trough because no old feed residues are left behind, no dirt (feed residues) can accumulate and no dirt can remain in the feeding trough for a longer period of time. As a result, it is not necessary to periodically clean the feeding trough manually or mechanically.

### Summary of the invention

An object of the invention is to provide a method for feeding pigs in which the feeding trough does not need to be cleaned for a long time and in which the well-being of the pigs is improved. To this end, the method according to the invention is characterized in that periodically during a cleaning period the limit value is reduced, and as soon as during this cleaning period the amount of feed in the feeding trough falls below the limit value, because pigs eat the feed, feed is supplied from the container to the feeding trough at a second feed rate, which second feed rate is so low that the amount of feed in the feeding trough decreases further, because the pigs eat feed faster than feed is supplied.

Pigs get stressed during feeding in case there is no food in the trough for some time. Instead of stopping the feed supply for a period of time the feed supply is reduced so that the pigs always have some food although not enough so that they clean the trough but not get stressed because of complete absence of food. Because the pigs don't get stressed during feeding the well-being of the pigs is improved which results in an improved growing of the pigs. The amount of feed can be measured continuously or periodically. The feeding trough can hereby be supplied with feed continuously or only during feeding periods.

An embodiment of the method according to the invention is characterized in that if the amount of feed in the feeding trough does not decrease during the said cleaning period, the second feed rate is reduced (stepwise).

The amount of feed in the feeding trough is preferably measured by weighing the feeding trough with the feed therein.

A further embodiment of the method according to the invention is characterized in that feed is supplied by opening a valve in an outlet opening present in the bottom of the container.

### Brief description of the drawings

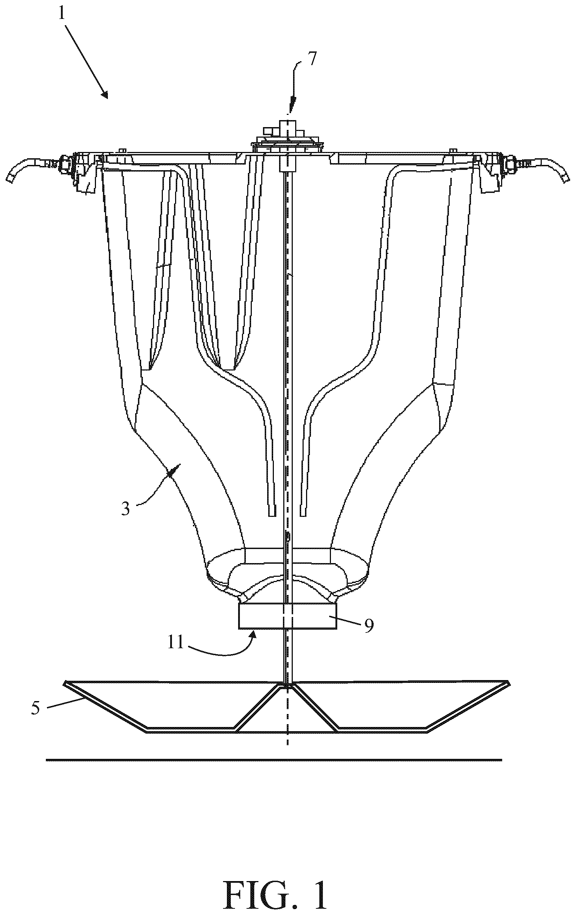

The invention will be further elucidated below on the basis of an exemplary embodiment shown in the drawings of a feeding device with which the method according to the invention can be carried out. Figure 1 shows the feeding device in longitudinal section.

### Detailed description of the drawings

Figure 1 shows a longitudinal section of an exemplary embodiment of a feeding device with which the method according to the invention can be carried out. The feeding device 1 has a container 3 for feed, as well as a feeding trough 5 present below the container, from which pigs can eat. The device is provided with measuring means 7 for periodically or continuously measuring the amount of feed in the feeding trough 5. These measuring means 7 are designed as an electronic weighing unit which is present on top of the container 3. The feeding trough 5 is suspended from the weighing unit via a rod. The container 3 has a funnel-shaped bottom with an outlet opening 11 in the center which can be closed by controllable supply means 9, designed as an controllable valve.

The feeding trough 5 can be supplied with feed continuously or only during feeding periods. At the start of feeding, an amount of feed is placed from the container 3 into the feeding trough 5 by opening the valve 9 for some time. This can be done by opening the valve 9 for a predetermined time or by opening the valve and simultaneously measuring the amount of feed in the feeding trough until a predetermined first amount of feed is present in the feeding trough 5 .

During feeding, the amount of feed in the feeding trough 5 is measured by continuously weighing the feeding trough with the feed present therein. As soon as the amount of feed in the feeding trough 5 falls below a predetermined and set limit value, because pigs eat the feed, feed is brought from the container 3 into the feeding trough 5 at a first feed rate. The weight of the feeding trough and the feed present therein is measured continuously and the supply of feed is terminated as soon as the first amount of feed is present in the feeding trough 5 again.

To prevent old feed from remaining at the bottom of the feeding trough 5 and from adhering to the feeding trough in places that are more difficult to access, it is ensured that the pigs periodically eat the feeding trough completely empty. This is achieved by periodically decreasing the limit value during a cleaning period and when the weight of the feed present in the feeding trough falls below this reduced limit value, because pigs eat the feed, feed from the container 3 to the feeding trough 5 at a second feed rate. This second feed rate is so low that the amount of feed in the feeding trough 5 further decreases because the pigs eat feed faster than feed is supplied.

If the amount of feed in the feeding trough 5 does not decrease during the said cleaning period, because the pigs do not eat faster than feed is supplied, the second feed rate is reduced.

By periodically ensuring that the pigs eat the feeding trough 5 completely empty, no old feed residues are left behind. As a result, it is not necessary to periodically clean the feeding trough 5 manually or mechanically.

Although the invention has been elucidated in the foregoing with reference to the drawings, it should be noted that the invention is by no means limited to the embodiment shown in the drawings. The invention also extends to all embodiments deviating from the embodiment shown in the drawings within the framework defined by the claims.

## Claims

1. A method of feeding pigs comprising:
- providing a feeding device (1) comprising:
- a container (3) for feed, as well as
- a feeding trough (5) from which pigs can eat,
- measuring means (7) for measuring the amount of feed in the feeding trough (5), and
- adjustable feed means (9) for supplying feed from the container (3) to the feeding trough (5),
- supplying feed from the container (3) to the feeding trough (5) until a first amount of feed is present in the feeding trough (5), and
- measuring the amount of food in the feeding trough (5) during feeding and as soon as the amount of feed in the feeding trough (5) falls below a limit value, feed is supplied from the container (3) to the feeding trough (5) at a first feed rate until the first amount of feed is again present in the feeding trough (5),
**characterized in that** periodically, during a cleaning period, the limit value is reduced, and as soon as during this cleaning period the amount of feed in the feeding trough (5) falls below the limit value, feed is supplied from the container (3) to the feeding trough (5) at a second feed rate, which second feed rate is so low that the amount of feed in the feeding trough (5) decreases further.

2. A method according to claim 1, **characterized in that**, if the amount of feed in the feeding trough (5) does not decrease during said cleaning period, the second feed rate is reduced.

3. Method according to claim 1 or 2, **characterized in that** the amount of feed in the feeding trough (5) is measured by weighing the feeding trough (5) with the feed therein.

4. A method according to claim 1, 2 or 3, **characterized in that** feed is supplied by opening a valve (9) in an outlet opening (11) in the bottom of the container (3).

## Patentansprüche

1. Verfahren zum Füttern von Schweinen, umfassend:
- Bereitstellen einer Fütterungsvorrichtung (1), umfassend:
- einen Behälter (3) für Futter sowie
- einen Futtertrog (5), aus dem Schweine fressen können,
- Messmittel (7) zum Messen der Futtermenge im Futtertrog (5) und
- einstellbare Futtermittel (9) zum Zuführen von Futter aus dem Behälter (3) zum Futtertrog (5),
- Zuführen von Futter aus dem Behälter (3) zum Futtertrog (5), bis eine erste Futtermenge im Futtertrog (5) vorhanden ist, und
- Messen der Futtermenge im Futtertrog (5) während der Fütterung und sobald die Futtermenge im Futtertrog (5) einen Grenzwert unterschreitet, Zuführen von Futter aus dem Behälter (3) zum Futtertrog (5) mit einer ersten Futterrate, bis die erste Futtermenge wieder im Futtertrog (5) vorhanden ist,
**dadurch gekennzeichnet, dass** periodisch, während einer Reinigungsperiode, der Grenzwert verringert wird, und sobald während dieser Reinigungsperiode die Futtermenge im Futtertrog (5) den Grenzwert unterschreitet, wird Futter aus dem Behälter (3) mit einer zweiten Futterrate in den Futtertrog (5) gefördert, wobei die zweite Futterrate so niedrig ist, dass die Futtermenge im Futtertrog (5) weiter abnimmt.

2. Verfahren nach Anspruch 1, **dadurch gekennzeichnet, dass**, wenn die Futtermenge im Futtertrog (5) während der Reinigungsperiode nicht abnimmt, die zweite Futterrate reduziert wird.

3. Verfahren nach Anspruch 1 oder 2, **dadurch gekennzeichnet, dass** die Futtermenge im Futtertrog (5) durch Wiegen des Futtertrogs (5) mit dem darin befindlichen Futter gemessen wird.

4. Verfahren nach Anspruch 1, 2 oder 3, **dadurch gekennzeichnet, dass** Futter durch Öffnen eines Ventils (9) in einer Auslassöffnung (11) im Boden des Behälters (3) gefördert wird.

## Revendications

1. Procédé d'alimentation de porcs comprenant :
- la fourniture d'un dispositif d'alimentation (1) comprenant :
- un récipient (3) pour l'alimentation, ainsi que
- une mangeoire (5) dans laquelle les porcs peuvent manger,
- des moyens de mesure (7) pour mesurer la quantité d'aliments dans la mangeoire (5), et
- des moyens d'alimentation réglables (9) pour alimenter la mangeoire (5) depuis le récipient (3),
- l'alimentation depuis le récipient (3) vers la mangeoire (5) jusqu'à ce qu'une première quantité d'aliments soit présente dans la mangeoire (5), et
- la mesure de la quantité d'aliments dans la mangeoire (5) pendant l'alimentation et dès que la quantité d'aliments dans la mangeoire (5) tombe en dessous d'une valeur limite, l'alimentation est fournie depuis le récipient (3) vers la mangeoire (5) à un premier débit d'alimentation jusqu'à ce que la première quantité d'aliments soit à nouveau présente dans la mangeoire (5),
**caractérisé en ce que** périodiquement, pendant une période de nettoyage, la valeur limite est réduite, et dès que pendant cette période

2. Procédé selon la revendication 1, **caractérisé en ce que**, si la quantité d'aliments dans la mangeoire (5) ne diminue pas pendant ladite période de nettoyage, le second débit d'alimentation est réduit.

3. Procédé selon la revendication 1 ou 2, **caractérisé en ce que** la quantité d'aliments dans la mangeoire (5) est mesurée en pesant la mangeoire (5) avec les aliments à l'intérieur.

4. Procédé selon la revendication 1, 2 ou 3, **caractérisé en ce que** l'alimentation est fournie en ouvrant une vanne (9) dans une ouverture de sortie (11) dans le fond du récipient (3).
